(19) Europäisches Patentamt
European Patent Office
Office européen des brevets

(11) EP 3 912 832 B2

(12) NEW EUROPEAN PATENT SPECIFICATION
After opposition procedure

(45) Date of publication and mention of the opposition decision:
**29.04.2026 Bulletin 2026/18**

(45) Mention of the grant of the patent:
**10.08.2022 Bulletin 2022/32**

(21) Application number: **21168260.4**

(22) Date of filing: **14.04.2021**

(51) International Patent Classification (IPC):
***B60C 1/00*** *(2006.01)* ***C08L 15/00*** *(2006.01)*

(52) Cooperative Patent Classification (CPC):
(C-Sets available)
**B60C 1/00; C08L 15/00;** Y02T 10/86 (Cont.)

# (54) RUBBER COMPOSITION AND TIRE

KAUTSCHUKZUSAMMENSETZUNG UND REIFEN

COMPOSITION DE CAOUTCHOUC ET PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2020 JP 2020085328**

(43) Date of publication of application:
**24.11.2021 Bulletin 2021/47**

(73) Proprietor: **Sumitomo Rubber Industries, Ltd.**
**Kobe-shi, Hyogo 651-0072 (JP)**

(72) Inventors:
- **OISHI, Kentaro**
  **Kobe-shi, 651-0072 (JP)**
- **WASHIZU, Kensuke**
  **Kobe-shi, 651-0072 (JP)**

(74) Representative: **TBK**
**Bavariaring 4-6**
**80336 München (DE)**

(56) References cited:
**EP-A1- 1 484 362**
**EP-A1- 2 722 361**
**EP-A1- 2 787 031**
**EP-A1- 3 581 597**
**WO-A1-2019/122600**
**US-A1- 2011 112 212**
**US-A1- 2011 237 737**



Processed by Luminess, 75001 PARIS (FR)

(Cont. next page)

(52) Cooperative Patent Classification (CPC): (Cont.)

C-Sets
**C08L 15/00, C08L 15/00, C08L 83/08, C08L 91/06, C08L 91/00, C08L 25/16, C08K 3/36, C08K 3/04, C08K 5/09, C08K 3/22, C08K 5/18, C08K 3/06, C08K 5/47, C08K 5/31**

## Description

### TECHNICAL FIELD

The present invention relates to rubber compositions and tires.

### BACKGROUND ART

Silica is widely used as a reinforcing filler to improve the fuel economy and other properties of rubber compositions. For example, Patent Literature 1 discloses a rubber composition containing a specific modified polymer and silica. In recent years, however, due to the demanding need for improved fuel economy, it has become desirable to further improve the performance. Meanwhile, there has also been a need for tires which exhibit an improved temperature dependence of the rolling resistance as compared to conventional tires because the fuel economy improvements made so far have extended the time required for the tire temperature to reach equilibrium, and also because the average annual temperature has been increasing.

### CITATION LIST

### PATENT LITERATURE

Patent Literature 1: JP 2012-224835 A

### SUMMARY OF INVENTION

### TECHNICAL PROBLEM

The present invention aims to provide rubber compositions in which dispersion of silica is increased to provide excellent overall performance in terms of the temperature dependence of the heat build-up properties and the fuel economy at constant temperatures. Thus, the present invention aims to provide rubber compositions and tires having improved rolling resistance in a wide temperature range.

### SOLUTION TO PROBLEM

The present invention relates to rubber compositions, containing: at least one polymer (A) having a silanol group; at least one polymer (B) having a basic functional group; and at least one silica. The rubber compositions contain at least one plasticizer including at least one resin in respective amounts satisfying the following relationship: Resin content/-Plasticizer content ≥ 0.50.
Preferably, the polymer (A) has the silanol group at a position other than at an end of the polymer, and the polymer (B) has a tertiary amino group.
Preferably, the polymer (A) has a degree of modification of 5% or higher.
Preferably, the polymer (B) has a degree of modification of 5% or higher.
Preferably, the rubber compositions contain, per 100 parts by mass of rubber components therein, 80 parts by mass or more of the silica.
Preferably, the silica has a nitrogen adsorption specific surface area of 170 $m^2/g$ or more.
Preferably, the rubber compositions contain at least one mercapto silane coupling agent.
Preferably, the polymers (A) and (B) each have an aromatic vinyl unit derived from an aromatic vinyl compound and a conjugated diene unit derived from a conjugated diene compound, and the rubber compositions further contain at least one styrene resin.
Preferably, the rubber compositions contain at least one plasticizer and the silica in respective amounts satisfying the following relationship:

$$\text{Plasticizer content/Silica content} \geq 0.50.$$

Preferably, the rubber compositions are prepared by a method including: a first base kneading step of kneading rubber components including the polymers (A) and (B); a second base kneading step of kneading the silica and a first kneaded mixture obtained in the first base kneading step; and a final kneading step of kneading at least one vulcanizing material and a second kneaded mixture obtained in the second base kneading step.

The present invention also relates to tires, including the rubber compositions.

ADVANTAGEOUS EFFECTS OF INVENTION

The rubber compositions of the present invention contain a polymer (A) having a silanol group, a polymer (B) having a basic functional group, and silica. Thus, provided are rubber compositions in which dispersion of silica is increased to provide excellent overall performance in terms of the temperature dependence of the heat build-up properties and the fuel economy at constant temperatures. Therefore, the present invention provides rubber compositions and tires having improved rolling resistance in a wide temperature range.

DESCRIPTION OF EMBODIMENTS

The present invention relates to rubber compositions containing at least one polymer (A) having a silanol group, at least one polymer (B) having a basic functional group, and at least one silica.

The mechanism of the above-mentioned advantageous effect is not clear, but may be explained as follows.

In order to improve temperature dependence and reduce heat build-up, it is considered necessary that the polymer domains restricted by silica in the rubber composition should be homogeneous and fine so that the silica can sufficiently bond to the polymer. However, it is considered difficult to increase dispersion of untreated silica whose surface is hydrophilic, and also to form a good bond between the silica and polymer. Hence, it is considered necessary firstly to hydrophobize silica during mixing to increase its dispersion into the rubber components. Since the hydrophobization of the silica surface is promoted under basic conditions, it is believed that the presence of the basic functional group previously provided on the polymer (B) promotes the hydrophobization of silica incorporated in the polymer (B), further enhancing the incorporation of silica into the polymer. Next, it is believed that the chemical bonding between the polymer and silica via the silane coupling agent may be promoted when a silanol group is present in the polymer. The above-described mechanism of action is believed to provide improved dispersion of silica in the rubber composition, so that the domains restricted by silica are homogenized, resulting in an improved temperature dependence and improved fuel economy at constant temperatures such as room temperature. Therefore, the overall performance in terms of these properties is improved, and rolling resistance (fuel economy) is improved in a wide temperature range.

(Rubber component)

The rubber compositions contain at least one polymer (A) having a silanol group as a rubber component.

Examples of the polymer for forming the polymer (A) having a silanol group include polymers having a conjugated diene unit derived from a conjugated diene compound, and polymers having an aromatic vinyl unit derived from an aromatic vinyl compound and a conjugated diene unit derived from a conjugated diene compound. Suitable among these are polymers having an aromatic vinyl unit derived from an aromatic vinyl compound and a conjugated diene unit derived from a conjugated diene compound.

Examples of the conjugated diene compound include 1,3-butadiene, isoprene, 1,3-pentadiene, 2,3-dimethyl-1,3-butadiene, 1,3-hexadiene, myrcene, and farnesene. The conjugated diene compound is preferably 1,3-butadiene or isoprene.

Examples of the aromatic vinyl compound include styrene, α-methylstyrene, vinyltoluene, vinylnaphthalene, divinylbenzene, trivinylbenzene, and divinylnaphthalene. The aromatic vinyl compound is preferably styrene.

Examples of the polymer for the polymer (A) having a silanol group also include rubbers used in the tire field. Examples of such rubbers include diene rubbers such as isoprene-based rubbers, polybutadiene rubber (BR), styrene-butadiene rubber (SBR), acrylonitrile-butadiene rubber (NBR), chloroprene rubber (CR), butyl rubber (IIR), and styrene-isoprene-butadiene copolymer rubber (SIBR).

To improve overall performance in terms of the temperature dependence of the heat build-up properties (dispersion of silica) and the fuel economy at constant temperatures to improve rolling resistance in a wide temperature range, isoprene-based rubbers, BR, and SBR are preferred among these, with SBR being more preferred.

The polymer (A) may be, for example, a chain end-modified polymer obtained by modifying at least one chain end of a polymer with a compound (modifier) having a silanol group (i.e., a chain end-modified polymer having a silanol group at the chain end), a backbone-modified polymer having a silanol group in the backbone (at a position other than at the end of the polymer chain), or a backbone- and chain end-modified polymer having a silanol group in both the backbone and chain end (e.g., a backbone-and chain end-modified polymer in which the backbone has a silanol group, and at least one chain end is modified with a compound (modifier) having a silanol group).

Among these, it is preferably a modified polymer having a silanol group at least at a position other than at the end of the polymer (e.g., in the backbone or side chain), more preferably a modified polymer having a silanol group at least in the backbone (e.g., the backbone-modified polymer, the backbone- and chain end-modified polymer having a silanol

group in both the backbone and chain end). It is believed that such a polymer (A) provided with a silanol group in the backbone as a whole may easily bond to silica, so that good dispersion of silica may be obtained while the movement of the backbone of the polymer may be restricted by silica. Thus, it is believed that the dispersion of silica may be increased to provide overall improvements in the temperature dependence of the heat build-up properties and the fuel economy at constant temperatures, and therefore the rolling resistance may be improved in a wide temperature range.

In an exemplary first embodiment of the polymer (A) having a silanol group, the silanol group in the polymer (A) is a pendant group. In this embodiment, the silicon atom of the silanol group is usually, for example, not present between the carbon-carbon bond in the backbone of the polymer (A). The polymer (A) having a silanol group as a pendant group may be prepared, for example, by hydrosilylating a polymer chain with a silane compound having an alkoxysilane functional group and then hydrolyzing the alkoxysilane functional group into a silanol functional group (silanol group).

In an exemplary second embodiment of the polymer (A) having a silanol group, the silanol group in the polymer (A) is not a pendant group, but is present in the polymer chain. In this embodiment, the silicon atom of the silanol group is usually, for example, present between the carbon-carbon bond in the polymer chain. Such a polymer (A) having a silanol group may be prepared, for example, by coupling with a coupling agent (modifier) having an alkoxysilane functional group and an amine functional group, followed by hydrolysis of the alkoxysilane functional group into a silanol functional group (silanol group).

The amine functional group is preferably a tertiary amine functional group, for example. The tertiary amine functional group may be, for example, a tertiary amine group preferably substituted with a $C_1$-$C_{10}$ alkyl group, more preferably a $C_1$-$C_4$ alkyl group, still more preferably a methyl or ethyl group.

Specifically, the modifier (coupling agent) may suitably be a compound (modifier) represented by the following formula:

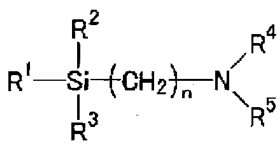

wherein $R^1$, $R^2$, and $R^3$ are the same or different and each represent an alkyl, alkoxy, silyloxy, acetal, carboxyl (-COOH), or mercapto (-SH) group or a derivative thereof; $R^4$ and $R^5$ are the same or different and each represent a hydrogen atom or an alkyl group, and $R^4$ and $R^5$ may be joined together to form a ring structure with the nitrogen atom; and n represents an integer.

$R^1$, $R^2$, and $R^3$ are each suitably an alkoxy group, preferably a C1-C8, more preferably C1-C4 alkoxy group. Preferably, at least one of $R^1$, $R^2$, and $R^3$ is an alkoxy group. $R^4$ and $R^5$ are each suitably an alkyl group, preferably a C1-C3 alkyl group. The symbol n is preferably 1 to 5, more preferably 2 to 4, still more preferably 3. When $R^4$ and $R^5$ are joined together to form a ring structure with the nitrogen atom, the ring structure is preferably a 4- to 8-membered ring. The term "alkoxy group" encompasses cycloalkoxy groups (e.g., cyclohexyloxy group) and aryloxy groups (e.g., phenoxy and benzyloxy groups).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. Preferred among these are 3-dimethylaminopropyltrimethoxysilane, 3-dimethylaminopropyltriethoxysilane, and 3-diethylaminopropyltrimethoxysilane.

Examples of the modifier also include N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl) aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane, and N,N-bis(trimethylsilyl)aminoethylmethyldiethoxysilane. These modifiers may be used alone or in combinations of two or more.

The hydrolysis of the alkoxysilane functional group in the polymer chain into a silanol functional group may be carried out by stripping a solution containing the polymer as described in, for example, JP 2014-122357 A.

The polymer chain of the polymer (A) having a silanol group is suitably in a linear form. When it contains a star chain and/or a branched chain, the proportion of these chains in the polymer (A) is preferably as small as possible. For example, the proportion of the star chain and/or branched chain in the polymer (A) is preferably 0% to less than 50% by mass based on 100% by mass of the total mass of the polymer (A). The polymer (A) is usually a mixture of polymers which are different in the chemical properties of the amine functional group, microstructure, or macrostructure.

The amount of the at least one polymer (A) based on 100% by mass of the rubber components in the rubber compositions is preferably 5% by mass or more, more preferably 20% by mass or more, still more preferably 35% by mass

or more, particularly preferably 45% by mass or more. The upper limit is preferably 80% by mass or less, more preferably 70% by mass or less, still more preferably 60% by mass or less. When the amount is within the range indicated above, the dispersion of silica tends to be increased to provide overall improvements in the temperature dependence of the heat build-up properties and the fuel economy at constant temperatures, and therefore the rolling resistance tends to be improved in a wide temperature range.

From the standpoint of overall performance in terms of dispersion of silica and fuel economy, the degree of modification of the polymer (A) is preferably 5% or higher, more preferably 6% or higher, still more preferably 7% or higher. The upper limit of the degree of modification is preferably 12% or lower, more preferably 10% or lower, still more preferably 9% or lower. It is believed that the polymer (A) having a degree of modification of 5% or higher can efficiently bond to silica, resulting in reduced heat build-up.

The degree of modification is measured as described later in EXAMPLES.

The rubber compositions contain at least one polymer (B) having a basic functional group as a rubber component. Examples of the basic functional group in the polymer (B) having a basic functional group include amino, imino (=NH), and ammonium salt groups. The amino group may be a primary amino group ($-NH_2$), a secondary amino group (-NHR), or a tertiary amino group (-NRR'), where R and R' are each an alkyl group, a phenyl group, an aralkyl group, or the like, which preferably has 1 to 8 carbon atoms. R and R' in the tertiary amino group (-NRR') may form a heterocyclic group having a basic nitrogen atom. Examples of the heterocyclic group having a basic nitrogen atom include nitrogen-containing heterocyclic groups, such as a pyridine group, a pyrimidine group, a pyrazine group, an imidazole group, a thiol-containing imidazole group, a triazole group, and a thiazole group. In the case of a heterocyclic group which has a double bond, it can easily disperse in the rubber. Examples of the ammonium salt groups include tertiary ammonium salt groups and quaternary ammonium salt groups. The basic functional group is preferably an amino group (amine group), more preferably a tertiary amino group such as a heterocyclic group having a basic nitrogen atom. Particularly when it is a tertiary amino group, the presence of the tertiary amino group in the polymer (B) promotes the hydrophobization of silica incorporated in the polymer (B), further enhancing the incorporation of silica into the polymer.

Examples of the polymer for forming the polymer (B) having a basic functional group include those as described for the polymer for forming the polymer (A). Preferred among these are polymers having an aromatic vinyl unit derived from an aromatic vinyl compound and a conjugated diene unit derived from a conjugated diene compound, isoprene-based rubbers, BR, and SBR, with SBR being particularly preferred.

The amount of the at least one polymer (B) based on 100% by mass of the rubber components in the rubber compositions is preferably 5% by mass or more, more preferably 20% by mass or more, still more preferably 35% by mass or more, particularly preferably 45% by mass or more. The upper limit is preferably 80% by mass or less, more preferably 70% by mass or less, still more preferably 60% by mass or less. When the amount is within the range indicated above, the dispersion of silica tends to be increased to provide overall improvements in the temperature dependence of the heat build-up properties and the fuel economy at constant temperatures, and therefore the rolling resistance tends to be improved in a wide temperature range.

From the standpoint of overall performance in terms of dispersion of silica and fuel economy, the degree of modification of the polymer (B) is preferably 5% or higher, more preferably 6% or higher, still more preferably 7% or higher. The upper limit of the degree of modification is preferably 12% or lower, more preferably 10% or lower, still more preferably 9% or lower. When the degree of modification is 5% or higher, it is believed that the hydrophobization of silica can be efficiently promoted, resulting in increased dispersion of silica.

The degree of modification is measured as described later in EXAMPLES.

From the standpoint of overall performance in terms of dispersion of silica and fuel economy, the combined amount of the polymers (A) and (B) based on 100% by mass of the rubber components in the rubber compositions is preferably 70% by mass or more, more preferably 80% by mass or more, still more preferably 90% by mass or more, and may be 100% by mass.

The polymers (A) and (B) each preferably have a weight average molecular weight (Mw) of 100,000 or more, more preferably 200,000 or more, still more preferably 300,000 or more. When the Mw is not less than the lower limit, such a high molecular weight also ensures a rigid rubber, so that the balance between fuel economy and handling stability tends to be improved. The upper limit of the Mw is not limited, but is preferably 1,000,000 or less, more preferably 800,000 or less, still more preferably 700,000 or less.

The polymers (A) and (B) each preferably have a styrene content of 5% by mass or higher, more preferably 15% by mass or higher, still more preferably 25% by mass or higher. The styrene content is preferably 45% by mass or lower, more preferably 35% by mass or lower, still more preferably 30% by mass or lower. When the styrene content is within the range indicated above, the dispersion of silica tends to be increased to provide overall improvements in the temperature dependence of the heat build-up properties and the fuel economy at constant temperatures, and therefore the rolling resistance tends to be improved in a wide temperature range.

The polymers (A) and (B) each preferably have a vinyl bond content of 20% by mass or higher, more preferably 35% by mass or higher, still more preferably 45% by mass or higher. The vinyl bond content is preferably 80% by mass or

lower, more preferably 70% by mass or lower, still more preferably 60% by mass or lower. When the vinyl bond content is within the range indicated above, the dispersion of silica tends to be increased to provide overall improvements in the temperature dependence of the heat build-up properties and the fuel economy at constant temperatures, and therefore the rolling resistance tends to be improved in a wide temperature range.

Herein, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards. The vinyl bond content (1,2-butadiene unit content) can be determined by infrared absorption spectrometry. The styrene content can be determined by $^1$H-NMR analysis.

The blend ratio of the polymers (A) and (B) (the amount (parts by mass) of the polymer (A)/the amount (parts by mass) of the polymer (B)) in the rubber compositions is preferably 20/80 or higher, more preferably 30/70 or higher, still more preferably 40/60 or higher. The blend ratio is preferably 80/20 or lower, more preferably 70/30 or lower, still more preferably 60/40 or lower. When the blend ratio is within the range indicated above, the dispersion of silica tends to be increased to provide overall improvements in the temperature dependence of the heat build-up properties and the fuel economy at constant temperatures, and therefore the rolling resistance tends to be improved in a wide temperature range.

The rubber compositions may contain additional rubber components in addition to the polymers (A) and (B). Examples of the additional rubber components include those as described for the polymer for forming the polymer (A) or (B).

Examples of the silica include dry silica (anhydrous silica) and wet silica (hydrous silica). Wet silica is preferred among these because it has a large number of silanol groups.

The amount of the at least one silica per 100 parts by mass of the rubber components is preferably 5 parts by mass or more, more preferably 50 parts by mass or more, still more preferably 70 parts by mass or more, particularly preferably 80 parts by mass or more. The upper limit of the amount is preferably 150 parts by mass or less, more preferably 130 parts by mass or less, still more preferably 120 parts by mass or less. When the amount is within the range indicated above, the dispersion of silica tends to be increased to provide overall improvements in the temperature dependence of the heat build-up properties and the fuel economy at constant temperatures, and therefore the rolling resistance tends to be improved in a wide temperature range. Particularly when the amount is 80 parts by mass or more, it is believed that the probability that the silica will encounter the modifying groups may increase, and therefore the advantageous effect can be more significantly achieved.

The silica preferably has a nitrogen adsorption specific surface area ($N_2SA$) of 50 $m^2/g$ or more, more preferably 100 $m^2/g$ or more, still more preferably 150 $m^2/g$ or more, particularly preferably 170 $m^2/g$ or more. The $N_2SA$ of the silica is preferably 300 $m^2/g$ or less, more preferably 250 $m^2/g$ or less, still more preferably 200 $m^2/g$ or less. When the $N_2SA$ is within the range indicated above, the dispersion of silica tends to be increased to provide overall improvements in the temperature dependence of the heat build-up properties and the fuel economy at constant temperatures, and therefore the rolling resistance tends to be improved in a wide temperature range. Particularly when the $N_2SA$ is 170 $m^2/g$ or more, it is believed that the silica having such a large specific surface area may have more reaction sites with the polymers to further restrict the polymers, resulting in reduced heat build-up.

The $N_2SA$ of the silica is measured by the BET method in accordance with ASTM D3037-93.

The silica may be commercially available from Degussa, Rhodia, Tosoh Silica Corporation, Solvay Japan, Tokuyama Corporation, etc.

To improve overall performance in terms of the temperature dependence of the heat build-up properties (dispersion of silica) and the fuel economy at constant temperatures to improve rolling resistance in a wide temperature range, the combined amount (parts by mass) of the polymers (A) and (B) and the amount (parts by mass) of silica in the rubber compositions preferably satisfy the following relationship:

$$\text{Silica content/Combined content of polymers (A) and (B)} \geq 0.50.$$

The ratio of "Silica content/Combined content of polymers (A) and (B)" is more preferably not lower than 0.60, still more preferably not lower than 0.70, particularly preferably not lower than 0.75. The upper limit of the ratio of "Silica content/Combined content of polymers (A) and (B)" is preferably not higher than 1.30, more preferably not higher than 1.10, still more preferably not higher than 1.00.

The rubber compositions preferably contain at least one silane coupling agent together with the silica.

Any silane coupling agent may be used, and examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products available from Degussa, Momentive, Shin-Etsu Silicone, Tokyo Chemical Industry Co., Ltd., AZmax. Co., Dow Corning Toray Co., Ltd., etc. may be used. These may be used alone or in combinations of two or more. Preferred among these are sulfide and mercapto silane coupling agents, with mercapto silane coupling agents being particularly preferred. It is believed that a mercapto silane coupling agent may be used to increase the reaction between the silica and coupling agent, so that the reaction between the hydrophobized silica and the polymers can be further promoted, resulting in reduced heat-build-up.

Examples of particularly suitable mercapto silane coupling agents include silane coupling agents represented by the formula (S1) below and silane coupling agents containing linking units A and B represented by the formulas (I) and (II), respectively, below. Preferred among these are silane coupling agents containing linking units A and B of formulas (I) and (II) .

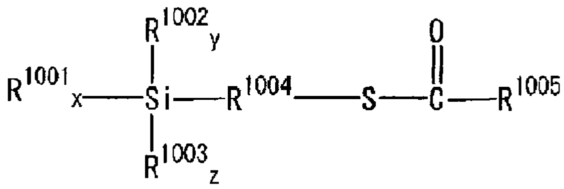

(S1)

In formula (S1), $R^{1001}$ represents a monovalent group selected from -Cl, -Br, $-OR^{1006}$, $-O(O=)CR^{1006}$, $-ON=CR^{1006}R^{1007}$, $-NR^{1006}R^{1007}$, and - $(OSiR^{1006}R^{1007})_h(OSiR^{1006}R^{1007}R^{1008})$ wherein $R^{1006}$, $R^{1007}$, and $R^{1008}$ may be the same or different and each represent a hydrogen atom or a C1-C18 monovalent hydrocarbon group, and h is 1 to 4 on average; $R^{1002}$ represents $R^{1001}$, a hydrogen atom, or a C1-C18 monovalent hydrocarbon group; $R^{1003}$ represents the group: - $[O(R^{1009}O)_j]$ - wherein $R^{1009}$ represents a C1-C18 alkylene group, and j represents an integer of 1 to 4; $R^{1004}$ represents a C1-C18 divalent hydrocarbon group; $R^{1005}$ represents a C1-C18 monovalent hydrocarbon group; and x, y, and z are numbers satisfying the following relationships: $x + y + 2z = 3$, $0 \leq x \leq 3$, $0 \leq y \leq 2$, and $0 \leq z \leq 1$.

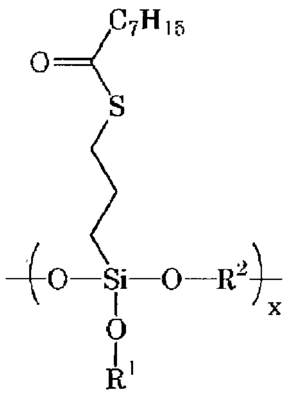

(I)

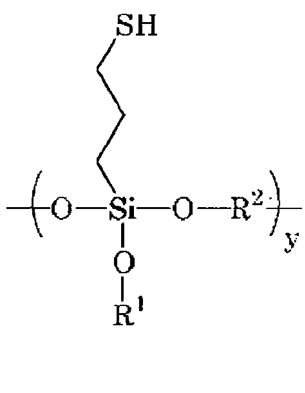

(II)

In formulas (I) and (II), x represents an integer of 0 or more; y represents an integer of 1 or more; $R^1$ represents a hydrogen atom, a halogen atom, a branched or unbranched C1-C30 alkyl group, a branched or unbranched C2-C30 alkenyl group, a branched or unbranched C2-C30 alkynyl group, or the alkyl group in which a terminal hydrogen atom is replaced with a hydroxy or carboxyl group; and $R^2$ represents a branched or unbranched C1-C30 alkylene group, a branched or unbranched C2-C30 alkenylene group, or a branched or unbranched C2-C30 alkynylene group, provided that $R^1$ and $R^2$ may together form a ring structure.

Preferably, $R^{1005}$, $R^{1006}$, $R^{1007}$, and $R^{1008}$ in formula (S1) are each independently selected from the group consisting of C1-C18 linear, cyclic, or branched alkyl, alkenyl, aryl, and aralkyl groups. When $R^{1002}$ is a C1-C18 monovalent hydrocarbon group, it is preferably selected from the group consisting of linear, cyclic, or branched alkyl, alkenyl, aryl, and aralkyl groups. $R^{1009}$ is preferably a linear, cyclic, or branched alkylene group, particularly preferably a linear alkylene group. Examples of $R^{1004}$ include C1-C18 alkylene groups, C2-C18 alkenylene groups, C5-C18 cycloalkylene groups, C6-C18 cycloalkylalkylene groups, C6-C18 arylene groups, and C7-C18 aralkylene groups. The alkylene and alkenylene groups may be linear or branched. The cycloalkylene, cycloalkylalkylene, arylene, and aralkylene groups may each have a functional group such as a lower alkyl group on the ring. Such $R^{1004}$ is preferably a C1-C6 alkylene group, particularly preferably a linear alkylene group such as a methylene group, an ethylene group, a trimethylene group, a tetramethylene group, a pentamethylene group, or a hexamethylene group.

Specific examples of $R^{1002}$, $R^{1005}$, $R^{1006}$, $R^{1007}$, and $R^{1008}$ in formula (S1) include methyl, ethyl, n-propyl, isopropyl, n-butyl, isobutyl, sec-butyl, tert-butyl, pentyl, hexyl, octyl, decyl, dodecyl, cyclopentyl, cyclohexyl, vinyl, propenyl, allyl, hexenyl, octenyl, cyclopentenyl, cyclohexenyl, phenyl, tolyl, xylyl, naphthyl, benzyl, phenethyl, and naphthylmethyl groups.

Examples of the linear alkylene group as $R^{1009}$ in formula (S1) include methylene, ethylene, n-propylene, n-butylene, and hexylene groups. Examples of the branched alkylene group as $R^{1009}$ include isopropylene, isobutylene, and 2-methylpropylene groups.

Specific examples of the silane coupling agents of formula (S1) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. These may be used alone or in combinations of two or more. Particularly preferred among these is 3-octanoylthiopropyltriethoxysilane.

The linking unit A content of the silane coupling agents containing linking units A and B of formulas (I) and (II) is preferably 30 mol% or higher, more preferably 50 mol% or higher, but is preferably 99 mol% or lower, more preferably 90 mol% or lower, while the linking unit B content is preferably 1 mol% or higher, more preferably 5 mol% or higher, still more preferably 10 mol% or higher, but is preferably 70 mol% or lower, more preferably 65 mol% or lower, still more preferably 55 mol% or lower. Moreover, the combined content of the linking units A and B is preferably 95 mol% or higher, more preferably 98 mol% or higher, particularly preferably 100 mol%.

The linking unit A or B content refers to the amount including the linking unit A or B present at the end of the silane coupling agent, if any. When the linking unit A or B is present at the end of the silane coupling agent, its form is not limited as long as it forms a unit corresponding to formula (I) representing the linking unit A or formula (II) representing the linking unit B.

Examples of the halogen atom for $R^1$ in formulas (I) and (II) include chlorine, bromine, and fluorine. Examples of the branched or unbranched C1-C30 alkyl group for $R^1$ include methyl and ethyl groups. Examples of the branched or unbranched C2-C30 alkenyl group for $R^1$ include vinyl and 1-propenyl groups. Examples of the branched or unbranched C2-C30 alkynyl group for $R^1$ include ethynyl and propynyl groups.

Examples of the branched or unbranched C1-C30 alkylene group for $R^2$ in formulas (I) and (II) include ethylene and propylene groups. Examples of the branched or unbranched C2-C30 alkenylene group for $R^2$ include vinylene and 1-propenylene groups. Examples of the branched or unbranched C2-C30 alkynylene group for $R^2$ include ethynylene and propynylene groups.

In the silane coupling agents containing linking units A and B of formulas (I) and (II), the total number of repetitions (x + y) consisting of the sum of the number of repetitions (x) of the linking unit A and the number of repetitions (y) of the linking unit B is preferably in the range of 3 to 300.

The amount of the at least one silane coupling agent, if present, per 100 parts by mass of the silica is preferably 3 parts by mass or more, more preferably 5 parts by mass or more, but is preferably 20 parts by mass or less, more preferably 15 parts by mass or less.

Carbon black may be used in the rubber compositions, and non-limiting examples include GPF, FEF, HAF, ISAF, and SAF. Commercial products available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. may be used. The incorporation of carbon black provides reinforcement and can significantly improve properties such as abrasion

resistance.

The amount of carbon black per 100 parts by mass of the rubber components in the rubber compositions is preferably 1 part by mass or more, more preferably 3 parts by mass or more. When the amount is not less than the lower limit, the effect of the incorporation of carbon black tends to be achieved. The amount of carbon black is also preferably 15 parts by mass or less, more preferably 10 parts by mass or less, still more preferably 8 parts by mass or less. When the amount is not more than the upper limit, good dispersion tends to be obtained.

The nitrogen adsorption specific surface area ($N_2SA$) of the carbon black is preferably 80 $m^2/g$ or more, more preferably 100 $m^2/g$ or more, still more preferably 105 $m^2/g$ or more. The carbon black having a $N_2SA$ of not less than the lower limit tends to provide good reinforcement. The upper limit of the $N_2SA$ of the carbon black is not limited, but is preferably 180 $m^2/g$ or less, more preferably 150 $m^2/g$ or less, still more preferably 130 $m^2/g$ or less.

The nitrogen adsorption specific surface area of the carbon black is determined by the method A stipulated in JIS K6217.

The rubber compositions may contain fillers other than silica and carbon black. Examples of such fillers include those known in the rubber field, such as calcium carbonate, talc, alumina, clay, aluminum hydroxide, aluminum oxide, and mica.

The rubber compositions contain at least one plasticizer. The term "plasticizer" refers to a material capable of plasticizing rubbers. Examples include liquid plasticizers (plasticizers that are liquid at 25°C) and resins. The term "resins" refers to resins that are solid at room temperature (25°C). In particular, the rubber compositions preferably incorporate rubber components including SBR with at least one plasticizer.

The amount of the at least one plasticizer (the combined amount of plasticizers including liquid plasticizers and resins) per 100 parts by mass of the rubber components in the rubber compositions is preferably 10 parts by mass or more, more preferably 30 parts by mass or more, still more preferably 45 parts by mass or more, particularly preferably 55 parts by mass or more. The upper limit of the amount is not limited, but is preferably 120 parts by mass or less, more preferably 100 parts by mass or less, still more preferably 80 parts by mass or less. When the amount is within the range indicated above, the dispersion of silica tends to be increased to provide overall improvements in the temperature dependence of the heat build-up properties and the fuel economy at constant temperatures, and therefore the rolling resistance tends to be improved in a wide temperature range.

The amount of liquid plasticizers per 100 parts by mass of the rubber components in the rubber compositions is preferably 3 parts by mass or more, more preferably 10 parts by mass or more, still more preferably 15 parts by mass or more, particularly preferably 20 parts by mass or more. The upper limit of the amount is not limited, but is preferably 50 parts by mass or less, more preferably 45 parts by mass or less, still more preferably 40 parts by mass or less. When the amount is within the range indicated above, the dispersion of silica tends to be increased to provide overall improvements in the temperature dependence of the heat build-up properties and the fuel economy at constant temperatures, and therefore the rolling resistance tends to be improved in a wide temperature range.

Any liquid plasticizer may be used, and examples include oils, liquid resins, and liquid diene polymers. These may be used alone or in combinations of two or more.

Examples of the oils include process oils and plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Commercial products available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin OilliO Group, Ltd., etc. may be used.

Examples of the liquid resins include those which are liquid at 25°C, such as terpene resins (including terpene phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins.

Examples of the liquid diene polymers include those which are liquid at 25°C, such as liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers. The chain end or backbone of these polymers may be modified with a polar group.

The amount of resins per 100 parts by mass of the rubber components in the rubber compositions is preferably 5 parts by mass or more, more preferably 15 parts by mass or more, still more preferably 20 parts by mass or more, particularly preferably 23 parts by mass or more. The upper limit of the amount is not limited, but is preferably 70 parts by mass or less, more preferably 55 parts by mass or less, still more preferably 50 parts by mass or less. When the amount is within the range indicated above, the dispersion of silica tends to be increased to provide overall improvements in the temperature dependence of the heat build-up properties and the fuel economy at constant temperatures, and therefore the

rolling resistance tends to be improved in a wide temperature range.

To improve overall performance in terms of the temperature dependence of the heat build-up properties (dispersion of silica) and the fuel economy at constant temperatures to improve rolling resistance in a wide temperature range, the softening point of the resins is preferably 60°C or higher, more preferably 70°C or higher, still more preferably 80°C or higher. The upper limit of the softening point is not limited, but is preferably 180°C or lower, more preferably 160°C or lower, still more preferably 140°C or lower.

The softening point of the resins is determined as set forth in JIS K 6220-1:2001 using a ring and ball softening point measuring apparatus and defined as the temperature at which the ball drops down.

Any resin may be used, and examples include coumarone resins, styrene resins, terpene resins, dicyclopentadiene resins (DCPD resins), C5 petroleum resins, C9 petroleum resins, C5/C9 petroleum resins, p-t-butylphenol acetylene resins, and acrylic resins. These may be used alone or in combinations of two or more.

The resins may be hydrogenated.

Preferred among these are terpene resins, styrene resins, and DCPD resins, with styrene resins being more preferred. In particular, in the rubber compositions containing a styrene resin with polymers having an aromatic vinyl unit derived from an aromatic vinyl compound and a conjugated diene unit derived from a conjugated diene compound as the polymers (A) and (B), it is believed that in addition to the above-mentioned effect caused by the presence of the common units between the polymers (A) and (B), the styrene resin may improve the compatibility between the polymers (A) and (B), so that the silica incorporated in the polymer (B) can more easily enter the polymer (A) phase, and therefore the overall performance in terms of dispersion of silica and heat build-up properties can be significantly improved.

The term "styrene resin" refers to a polymer produced from a styrenic monomer as a structural monomer. Examples include polymers polymerized from styrenic monomers as main components (at least 50% by mass) . Specific examples include homopolymers polymerized from single styrenic monomers (e.g., styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene), copolymers copolymerized from two or more styrenic monomers, and copolymers of styrenic monomers and additional monomers copolymerizable therewith. These may be used alone or in combinations of two or more.

Examples of the additional monomers include acrylonitriles such as acrylonitrile and methacrylonitrile; unsaturated carboxylic acids such as acrylic and methacrylic acids; unsaturated carboxylic acid esters such as methyl acrylate and methyl methacrylate; dienes such as chloroprene, butadiene, and isoprene; olefins such as 1-butene and 1-pentene; and α,β-unsaturated carboxylic acids and acid anhydrides thereof such as maleic anhydride.

Among the styrene resins, α-methylstyrene resins (e.g., α-methylstyrene homopolymers, copolymers of α-methylstyrene and styrene) are preferred.

Any terpene resin having a unit derived from a terpene compound may be used. Examples include polyterpenes (resins polymerized from terpene compounds), terpene aromatic resins (resins copolymerized from terpene compounds and aromatic compounds), and aromatic modified terpene resins (resins obtained by modification of terpene resins with aromatic compounds) . These may be used alone or in combinations of two or more. Polyterpenes are preferred among these.

The term "terpene compounds" refers to hydrocarbons having a composition represented by $(C_5H_8)_n$ or oxygen-containing derivatives thereof, each of which has a terpene backbone and is classified as, for example, a monoterpene ($C_{10}H_{16}$), sesquiterpene ($C_{15}H_{24}$), or diterpene ($C_{20}H_{32}$). Examples include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol. Examples of the terpene compounds also include resin acids (rosin acids) such as abietic acid, neoabietic acid, palustric acid, levopimaric acid, pimaric acid, and isopimaric acid. In other words, the terpene resins include rosin resins mainly containing rosin acids obtained by processing pine resin. Examples of the rosin resins include natural rosin resins (polymerized rosins) such as gum rosins, wood rosins, and tall oil rosins; modified rosin resins such as maleic acid-modified rosin resins and rosin-modified phenol resins; rosin esters such as rosin glycerol esters; and disproportionated rosin resins obtained by disproportionation of rosin resins.

Any aromatic compound having an aromatic ring may be used. Examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; and styrene and styrene derivatives such as alkylstyrenes, alkoxystyrenes, and unsaturated hydrocarbon group-containing styrenes. Styrene is preferred among these.

The resins may be commercially available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

To improve overall performance in terms of the temperature dependence of the heat build-up properties (dispersion of silica) and the fuel economy at constant temperatures to improve rolling resistance in a wide temperature range, the amount (parts by mass) of plasticizers (the combined amount of plasticizers including liquid plasticizers and

resins) and the amount (parts by mass) of resins in the rubber compositions satisfy the following relationship:

$$\text{Resin content/Plasticizer content} \geq 0.50.$$

The ratio of "Resin content/Plasticizer content" is preferably not lower than 0.55, more preferably not lower than 0.57, still more preferably not lower than 0.60. The upper limit of the ratio of "Resin content/Plasticizer content" is more preferably not higher than 0.90, still more preferably not higher than 0.75, particularly preferably not higher than 0.70.

To improve overall performance in terms of the temperature dependence of the heat build-up properties (dispersion of silica) and the fuel economy at constant temperatures to improve rolling resistance in a wide temperature range, the amount (parts by mass) of plasticizers (the combined amount of plasticizers including liquid plasticizers and resins) and the amount (parts by mass) of silica in the rubber compositions preferably satisfy the following relationship: Plasticizer content/Silica content ≥ 0.50.

The ratio of "Plasticizer content/Silica content" is more preferably not lower than 0.70, still more preferably not lower than 0.80, particularly preferably not lower than 0.85. The upper limit of the ratio of "Plasticizer content/Silica content" is preferably not higher than 1.10, more preferably not higher than 1.00, still more preferably not higher than 0.95.

To improve overall performance in terms of the temperature dependence of the heat build-up properties (dispersion of silica) and the fuel economy at constant temperatures to improve rolling resistance in a wide temperature range, the amount (parts by mass) of resins and the amount (parts by mass) of silica in the rubber compositions preferably satisfy the following relationship:

$$\text{Resin content/Silica content} \geq 0.30.$$

The ratio of "Resin content/Silica content" is more preferably not lower than 0.40, still more preferably not lower than 0.45, particularly preferably not lower than 0.50. The upper limit of the ratio of "Resin content/Silica content" is preferably not higher than 1.00, more preferably not higher than 0.80, still more preferably not higher than 0.75.

The rubber compositions may contain at least one wax.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. These may be used alone or in combinations of two or more. Preferred among these are petroleum waxes, with paraffin waxes being more preferred.

The waxes may be commercially available from Ouchi Shinko Chemical Industrial Co., Ltd., Nippon Seiro Co., Ltd., Seiko Chemical Co., Ltd., etc.

The amount of the at least one wax, if present, per 100 parts by mass of the rubber components is preferably 0.3 parts by mass or more, more preferably 0.5 parts by mass or more, but is preferably 20 parts by mass or less, more preferably 10 parts by mass or less.

The rubber compositions may contain at least one antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)-propionate]methane. These may be used alone or in combinations of two or more. Preferred among these are p-phenylenediamine and/or quinoline antioxidants.

The antioxidants may be commercially available from Seiko Chemical Co., Ltd., Sumitomo Chemical Co., Ltd., Ouchi Shinko Chemical Industrial Co., Ltd., Flexsys, etc.

The amount of the at least one antioxidant, if present, per 100 parts by mass of the rubber components is preferably 0.5 parts by mass or more, more preferably 1 part by mass or more, but is preferably 10 parts by mass or less, more preferably 5 parts by mass or less.

The rubber compositions may contain at least one stearic acid.

The stearic acid may be a conventional one, e.g., available from NOF Corporation, Kao Corporation, FUJIFILM Wako Pure Chemical Corporation, or Chiba Fatty Acid Co., Ltd.

The amount of the at least one stearic acid, if present, per 100 parts by mass of the rubber components is preferably 0.5 parts by mass or more, more preferably 1 part by mass or more, but is preferably 10 parts by mass or less, more preferably 5 parts by mass or less.

The rubber compositions may contain at least one zinc oxide.

The zinc oxide may be a conventional one, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The amount of the at least one zinc oxide, if present, per 100 parts by mass of the rubber components is preferably 0.5 parts by mass or more, more preferably 1 part by mass or more, but is preferably 10 parts by mass or less, more preferably 5 parts by mass or less.

The rubber compositions may contain at least one sulfur.

Examples of the sulfur include those commonly used in the rubber industry, such as powdered sulfur, precipitated sulfur, colloidal sulfur, insoluble sulfur, highly dispersible sulfur, and soluble sulfur. These may be used alone or in combinations of two or more.

The sulfur may be commercially available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc.

The amount of the at least one sulfur, if present, per 100 parts by mass of the rubber components is preferably 0.1 parts by mass or more, more preferably 0.5 parts by mass or more, but is preferably 10 parts by mass or less, more preferably 5 parts by mass or less, still more preferably 3 parts by mass or less.

The rubber compositions may contain at least one vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl) thiuram disulfide (TOT-N) ; sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Preferred among these are sulfenamide and/or guanidine vulcanization accelerators.

The amount of the at least one vulcanization accelerator, if present, per 100 parts by mass of the rubber components is preferably 1 part by mass or more, more preferably 2 parts by mass or more, but is preferably 10 parts by mass or less, more preferably 7 parts by mass or less.

In addition to the above-mentioned components, the rubber compositions may further contain additional compounding agents (e.g., organic crosslinking agents) commonly used in the tire industry. The amount of each of such compounding agents per 100 parts by mass of the rubber components is preferably 0.1 to 200 parts by mass.

The rubber compositions may be prepared, for example, by kneading the components in a rubber kneading machine such as an open roll mill or a Banbury mixer, and then press-forming the kneaded mixture.

The conditions for kneading the components are as follows. The kneading temperature is usually 100 to 180°C, preferably 120 to 170°C, and the kneading time is usually 1 to 30 minutes, preferably 2 to 10 minutes. Regarding the conditions for press-forming the kneaded mixture obtained by the kneading, the temperature is usually 140 to 190°C, preferably 150 to 185°C, and the time is usually 1 to 60 minutes, preferably 5 to 30 minutes.

The rubber compositions may preferably be prepared by a method including: a first base kneading step of kneading rubber components including the polymers (A) and (B); a second base kneading step of kneading the silica and a first kneaded mixture obtained in the first base kneading step; and a final kneading step of kneading at least one vulcanizing material and a second kneaded mixture obtained in the second base kneading step.

The first base kneading step may be performed by any kneading method, for example, using a known kneading machine such as a Banbury mixer or a kneader. In the first base kneading step, the kneading time is preferably 1 to 10 minutes, and the kneading temperature is preferably 130 to 160°C.

All or part of the rubber components may be kneaded in the first base kneading step. Preferably, at least the total amount of the polymers (A) and (B) are kneaded.

Moreover, appropriate components other than the above-mentioned components may be kneaded in the first base kneading step.

The second base kneading step may be performed by any kneading method, for example, as described for the first base kneading step. The kneading conditions (kneadinig time, kneading temperature) may also be as described above.

All or part of the silica may be kneaded in the second base kneading step. Preferably, the total amount of the silica is kneaded.

Moreover, appropriate components other than the silica may be kneaded in the second base kneading step.

In the final kneading step, a second kneaded mixture obtained in the second base kneading step may be kneaded with at least one vulcanizing material. They may be kneaded by any method, for example, using a known kneading machine such as an open roll mill. The kneading time is preferably 0.5 to 15 minutes, and the kneading temperature is preferably 40 to 80°C.

Usually, the second kneaded mixture, at least one sulfur, and at least one vulcanization accelerator are kneaded in the final kneading step. However, when part of the materials that are usually kneaded in a base kneading process are not

kneaded in the first or second kneading step, it may also be kneaded as appropriate in the final kneading step.

The rubber compositions may be used in tire components (i.e., as tire rubber compositions), including, for example, treads (cap treads), sidewalls, base treads, undertreads, clinches, bead apexes, breaker cushion rubbers, rubbers for carcass cord topping, insulations, chafers, and innerliners, as well as side reinforcement layers of run-flat tires. The rubber compositions may be suitably used in treads, among others.

The tires of the present invention may be produced from the rubber compositions by usual methods.

Specifically, an unvulcanized rubber composition as described above may be extruded into the shape of a tire component such as a tread and then assembled with other tire components in a tire building machine in a usual manner to build an unvulcanized tire, which may then be heated and pressurized in a vulcanizer to produce a tire.

The tires at least partially (for example, the tread) include the rubber compositions. The tires may entirely include the rubber compositions. The tires are preferably pneumatic tires.

The pneumatic tires can be used as tires for passenger vehicles, large passenger vehicles, large SUVs, heavy duty vehicles such as trucks and buses, light trucks, or motorcycles, racing tires (high performance tires), or other tires. They can also be used as all-season tires, summer tires, winter tires (e.g., studless winter tires, cold weather tires), or other tires. Preferred among these are tires for passenger vehicles.

EXAMPLES

The present invention will be specifically described with reference to, but not limited to, examples. Examples in which the rubber compositions contain at least one plasticizer including at least one resin in respective amounts satisfying the following relationship Resin content/Plasticizer content $\geq$ 0.50 are Examples in accordance with the present invention.

Rubber compositions of various formulations as shown in the tables are prepared from the chemicals listed below on the assumption that they will be used in the tread of tires (tire size: 195/65R15). The dispersion of silica in the (vulcanized) rubber compositions and the rolling resistance (fuel economy) at constant temperatures of the tires are calculated. The results are indicated in the "Evaluation" field of the tables. It should be noted that Comparative Examples 1-1, 2-1, 3-1, and 4-1 are used as standards of comparison in Tables 1, 2, 3, and 4, respectively.

The chemicals used in the examples and comparative examples are listed below.

Unmodified SBR: SBR1502 available from Sumitomo Chemical Co., Ltd.
Modified polymer (A1) having silanol group: Production Example 1 below (chain end-modified SBR, degree of modification 8%, Mw 450000, styrene content 27% by mass, vinyl bond content 57% by mass)
Modified polymer (A2) having silanol group: Production Example 1 below (chain end-modified SBR, degree of modification 9%, Mw 500000, styrene content 24% by mass, vinyl bond content 55% by mass)
Modified polymer (A3) having silanol group: Production Example 2 below (backbone- and chain end-modified SBR, degree of modification 7.5%, Mw 150000, styrene content 26% by mass, vinyl bond content 58% by mass)
Modified polymer (A4) having silanol group: Production Example 2 below (backbone- and chain end-modified SBR, degree of modification 8.5%, Mw 200000, styrene content 22% by mass, vinyl bond content 48% by mass)
Pyridine-modified SBR 1: pyridine group content 7.2% by mass
Pyridine-modified SBR 2: pyridine group content 8.7% by mass
Silica: Ultrasil VN3 ($N_2SA$ 175 $m^2/g$) available from Evonik Degussa
Carbon black: Shoblack N220 ($N_2SA$ 111 $m^2/g$) available from Cabot Japan K.K.
Zinc oxide: zinc oxide #1 available from Mitsui Mining & Smelting Co., Ltd.
Stearic acid: stearic acid beads "TSUBAKI" available from NOF Corporation
Antioxidant: Antigene 3C available from Sumitomo Chemical Co., Ltd.
Silane coupling agent: NXT-Z45 (copolymer of linking units A and B, linking unit A: 55 mol%, linking unit B: 45 mol%) available from Momentive
Wax: SUNNOC N available from Ouchi Shinko Chemical Industrial Co., Ltd.
Oil: VIVATEC 500 (TDAE oil) available from H&R
Styrene resin: Sylvatraxx 4401 (a-methylstyrene resin (copolymer of $\alpha$-methylstyrene and styrene), softening point 85°C) available from Arizona Chemical
Sulfur: powdered sulfur available from Tsurumi Chemical Industry Co., Ltd.
Vulcanization accelerator 1: Soxinol CZ (N-cyclohexyl-2-benzothiazolylsulfenamide) available from Sumitomo Chemical Co., Ltd.
Vulcanization accelerator 2: Soxinol D (1,3-diphenylguanidine) available from Sumitomo Chemical Co., Ltd.

(Synthesis Example 1: synthesis of organic silane compound a1 to be used in modification reaction step)

A 1 mol/L solution of 3-dimethylaminopropyltrimethoxysilane in cyclohexane is prepared in a dried, nitrogen-purged pressure resistant glass vessel. To the solution is dropwise added an equimolar amount of a 1 mol/L solution of methyllithium (MeLi) in diethyl ether, and they are stirred well to prepare a modifier solution (a1) containing an organic silane compound (3-dimethylaminopropyl(dimethoxy)methylsilane).

(Production Example 1: production of modified polymer (A1) or (A2) having silanol group)

<Production of conjugated diene copolymer having active terminal>

A solution of 1, 3-butadiene in cyclohexane and a solution of styrene in cyclohexane are added to a dried, nitrogen-purged pressure resistant glass vessel. To the vessel are added 2,2-ditetrahydrofurylpropane and then n-butyllithium (BuLi), followed by performing a polymerization reaction in a warm water bath at 50°C. The polymerization conversion ratio in the reaction is almost 100%.

<Modification reaction step>

Next, to the polymerization reaction system is added the organic silane compound (a1) obtained in Synthesis Example 1 in an equimolar amount with respect to the lithium (Li), followed by performing a modification reaction at 50°C for 30 minutes.

<Hydrolysis step and subsequent steps>

Then, dilute hydrochloric acid is added little by little to the polymerization reaction system and subsequently water is added in an amount three times the molar amount of the lithium, followed by stirring for 30 minutes. Then, a solution of 2,6-di-tert-butyl-p-cresol (BHT) in isopropanol is added to the polymerization reaction system to stop the polymerization reaction. Thereafter, the partial pressure of the solvent is reduced by blowing water vapor (steam stripping) to remove the solvent, followed by vacuum drying to obtain a modified polymer (A1) or (A2) having a silanol group (chain end-modified polymer).

(Production Example 2: production of modified polymer (A3) or (A4) having silanol group)

A solution of cyclohexane, 1,3-butadiene, styrene, and 2,2-ditetrahydrofurylpropane in cyclohexane is injected into a nitrogen-purged autoclave in a nitrogen atmosphere, and n-butyllithium (BuLi) is added thereto. Then, polymerization is performed in a warm water bath equipped with a stirrer at 50°C. The polymerization conversion ratio in the reaction is almost 100%.

The polymerization solution is still maintained at 50°C without deactivating the polymerization catalyst. To the polymerization solution is added N,N-bis(trimethylsilyl)aminopropylmethyldiethoxysilane having a precursor which can be hydrolyzed to form a primary amino group, followed by performing a modification reaction for 15 minutes. Thereafter, the condensation accelerator tetrakis(2-ethyl-1,3-hexanediolato)titanium is added and further stirred for 15 minutes. Finally, 2,6-di-tert-butyl-p-cresol is added to the reacted polymer solution. Then, removal of the solvent by steam stripping and hydrolysis of the precursor which can form a primary amino group are performed. The resulting rubber is dried on a hot roll adjusted to 110°C to obtain a modified polymer (A3) or (A4) having a silanol group (backbone-and chain end-modified polymer).

(Measurement of degree of modification of polymer)

The degree of modification of the polymers are calculated using the following equation:

$$\text{Degree of modification (\%)} = (F-G)/(H) \times 100$$

wherein F represents the amount (g) of the modifier added, G represents the amount (g) of the modifier remaining after completion of the polymerization, and H represents the weight (g) of the resulting polymer. To calculate the amount G, a portion of the reaction solution is drawn and alcohol is added to precipitate the rubber. Then, the percentage of the modifier remaining in the solvent is calculated from a calibration curve using a gas chromatography GC2010 (FID detector) available from Shimadzu Corporation.

<Preparation conditions (rubber composition)>

(Base kneading step)

The materials indicated in the "Base kneading" field in each table are kneaded in a 1.7 L Banbury mixer to obtain a kneaded mixture. In each table, the "X-1" and "X-2" fields mean that the materials are introduced and kneaded in the stated order and for each field. The kneading temperature and time in these fields are as follows.

X-1 (first base kneading step):
kneading temperature: 150°C, kneading time: five minutes
X-2 (second base kneading step):
kneading temperature: 150°C, kneading time: five minutes

(Final kneading step)

The materials indicated in the "Final kneading" field in each table are introduced into a second kneaded mixture obtained in the second base kneading step, and kneaded at 70°C for eight minutes using an open roll mill to obtain an unvulcanized rubber composition.

<Production conditions (test tire)>

Unvulcanized rubber compositions are prepared as described above. The unvulcanized rubber compositions are each formed into a cap tread shape and assembled with other tire components, followed by vulcanization at 170°C for 15 minutes to produce a test tire (tire size: 195/65R15).

(Silica dispersion index)

The $\Delta G^*$ (= maximum $G^*$ - minimum $G^*$) of the rubber compositions (unvulcanized rubber compositions) prepared under the <Preparation conditions (rubber composition)> at a dynamic strain of 0.5, 1, 2, 4, 8, 16, 32, or 64% is estimated at 100°C and 1 Hz using RPA 2000 tester available from Alpha Technologies. The $\Delta G^*$ of each formulation example is expressed as an index using the equation below. A higher index indicates better dispersion of silica and better temperature dependence of the heat build-up properties.

(Silica dispersion index) = ($\Delta G^*$ of standard comparative example/$\Delta G^*$ of each formulation example) $\times$ 100

(Fuel economy index (calculated from vehicle simulation evaluation)

The rolling resistance of the test tires produced under the <Production conditions (test tire)> is measured using a rolling resistance tester by running the tires at a speed of 80 km/h. The rolling resistances are expressed as an index relative to the standard comparative example (= 100). A higher index indicates better fuel economy at constant temperatures.

[Table 1]

| | | | | Comparative Example | | | | | Example | | | |
|---|---|---|---|---|---|---|---|---|---|---|---|---|
| | | | | 1-1 | 1-2 | 1-3 | 1-4 | 1-5 | 1-1 | 1-2 | 1-3 | 1-4 |
| Formulation (parts by mass) | Base kneading | X-1 | Unmodified SBR | 0 | 100 | 0 | 0 | 50 | 0 | 0 | 0 | 0 |
| | | | Modified polymer (A1) having silanol group | 0 | 0 | 100 | 0 | 0 | 0 | 50 | 0 | 45 |
| | | | Modified polymer (A3) having silanol group | 100 | 0 | 0 | 0 | 0 | 50 | 0 | 45 | 0 |
| | | | Pyridine-modified SBR 1 | 0 | 0 | 0 | 100 | 50 | 50 | 50 | 55 | 55 |
| | | X-2 | Silica | 80 | 80 | 80 | 80 | 80 | 80 | 80 | 80 | 80 |
| | | | Carbon black | 5 | 5 | 5 | 5 | 5 | 5 | 5 | 5 | 5 |
| | | | Zinc oxide | 2.5 | 2.5 | 2.5 | 2.5 | 2.5 | 2.5 | 2.5 | 2.5 | 2.5 |
| | | | Stearic acid | 2 | 2 | 2 | 2 | 2 | 2 | 2 | 2 | 2 |
| | | | Antioxidant | 2.5 | 2.5 | 2.5 | 2.5 | 2.5 | 2.5 | 2.5 | 2.5 | 2.5 |
| | | | Silane coupling agent | 6.4 | 6.4 | 6.4 | 6.4 | 6.4 | 6.4 | 6.4 | 6.4 | 6.4 |
| | | | Wax | 2 | 2 | 2 | 2 | 2 | 2 | 2 | 2 | 2 |
| | Final kneading | | Sulfur | 1 | 1 | 1 | 1 | 1 | 1 | 1 | 1 | 1 |
| | | | Vulcanization accelerator 1 | 1.5 | 1.5 | 1.5 | 1.5 | 1.5 | 1.5 | 1.5 | 1.5 | 1.5 |
| | | | Vulcanization accelerator 2 | 2.5 | 2.5 | 2.5 | 2.5 | 2.5 | 2.5 | 2.5 | 2.5 | 2.5 |
| Evaluation | Silica dispersion index | | | 100 | 72 | 91 | 72 | 98 | 108 | 108 | 106 | 105 |
| | Fuel economy index | | | 100 | 73 | 101 | 118 | 100 | 132 | 125 | 128 | 122 |
| | Overall performance | | | 200 | 145 | 192 | 190 | 198 | 240 | 233 | 234 | 227 |

[Table 2]

| | | | | Comparative Example | Example | | | |
|---|---|---|---|---|---|---|---|---|
| | | | | 2-1 | 2-1 | 2-2 | 2-3 | 2-4 |
| Formulation (parts by mass) | Base kneading | X-1 | Unmodified SBR | 0 | 0 | 0 | 0 | 0 |
| | | | Modified polymer (A2) having silanol group | 0 | 0 | 50 | 0 | 45 |
| | | | Modified polymer (A4) having silanol group | 100 | 50 | 0 | 45 | 0 |
| | | | Pyridine-modified SBR 2 | 0 | 50 | 50 | 55 | 55 |
| | | X-2 | Silica | 80 | 80 | 80 | 80 | 80 |
| | | | Carbon black | 5 | 5 | 5 | 5 | 5 |
| | | | Zinc oxide | 2.5 | 2.5 | 2.5 | 2.5 | 2.5 |
| | | | Stearic acid | 2 | 2 | 2 | 2 | 2 |
| | | | Antioxidant | 2.5 | 2.5 | 2.5 | 2.5 | 2.5 |
| | | | Silane coupling agent | 6.4 | 6.4 | 6.4 | 6.4 | 6.4 |
| | | | Wax | 2 | 2 | 2 | 2 | 2 |
| | Final kneading | | Sulfur | 1 | 1 | 1 | 1 | 1 |
| | | | Vulcanization accelerator 1 | 1.5 | 1.5 | 1.5 | 1.5 | 1.5 |
| | | | Vulcanization accelerator 2 | 2.5 | 2.5 | 2.5 | 2.5 | 2.5 |
| Evaluation | Silica dispersion index | | | 100 | 110 | 109 | 108 | 105 |
| | Fuel economy index | | | 100 | 135 | 129 | 130 | 120 |
| | Overall performance | | | 200 | 245 | 238 | 238 | 225 |

[Table 3]

| | | | | Comparative Example | Example | | | |
|---|---|---|---|---|---|---|---|---|
| | | | | 3-1 | 3-1 | 3-2 | 3-3 | 3-4 |
| Formulation (parts by mass) | Base kneading | X-1 | Unmodified SBR | 0 | 0 | 0 | 0 | 0 |
| | | | Modified polymer (A1) having silanol group | 0 | 0 | 50 | 0 | 45 |
| | | | Modified polymer (A3) having silanol group | 100 | 50 | 0 | 45 | 0 |
| | | | Pyridine-modified SBR 1 | 0 | 50 | 50 | 55 | 55 |
| | | X-2 | Silica | 80 | 80 | 80 | 80 | 80 |
| | | | Carbon black | 5 | 5 | 5 | 5 | 5 |
| | | | Zinc oxide | 2.5 | 2.5 | 2.5 | 2.5 | 2.5 |
| | | | Stearic acid | 2 | 2 | 2 | 2 | 2 |
| | | | Antioxidant | 2.5 | 2.5 | 2.5 | 2.5 | 2.5 |
| | | | Silane coupling agent | 6.4 | 6.4 | 6.4 | 6.4 | 6.4 |
| | | | Wax | 2 | 2 | 2 | 2 | 2 |
| | | | Oil | 25 | 25 | 25 | 25 | 25 |
| | | | Styrene resin | 45 | 45 | 45 | 45 | 45 |
| | Final kneading | | Sulfur | 1 | 1 | 1 | 1 | 1 |
| | | | Vulcanization accelerator 1 | 1.5 | 1.5 | 1.5 | 1.5 | 1.5 |
| | | | Vulcanization accelerator 2 | 2.5 | 2.5 | 2.5 | 2.5 | 2.5 |
| Evaluation | Silica dispersion index | | | 100 | 107 | 105 | 105 | 104 |
| | Fuel economy index | | | 100 | 128 | 120 | 125 | 115 |
| | Overall performance | | | 200 | 235 | 225 | 230 | 219 |

[Table 4]

| | | | | Comparative Example | Example | | | |
|---|---|---|---|---|---|---|---|---|
| | | | | 4-1 | 4-1 | 4-2 | 4-3 | 4-4 |
| Formulation (parts by mass) | Base kneading | X-1 | Unmodified SBR | 0 | 0 | 0 | 0 | 0 |
| | | | Modified polymer (A1) having silanol group | 0 | 0 | 50 | 0 | 45 |
| | | | Modified polymer (A3) having silanol group | 100 | 50 | 0 | 45 | 0 |
| | | | Pyridine-modified SBR 1 | 0 | 50 | 50 | 55 | 55 |
| | | X-2 | Silica | 130 | 130 | 130 | 130 | 130 |
| | | | Carbon black | 5 | 5 | 5 | 5 | 5 |
| | | | Zinc oxide | 2.5 | 2.5 | 2.5 | 2.5 | 2.5 |
| | | | Stearic acid | 2 | 2 | 2 | 2 | 2 |
| | | | Antioxidant | 2.5 | 2.5 | 2.5 | 2.5 | 2.5 |
| | | | Silane coupling agent | 6.4 | 6.4 | 6.4 | 6.4 | 6.4 |
| | | | Wax | 2 | 2 | 2 | 2 | 2 |
| | Final kneading | | Sulfur | 1 | 1 | 1 | 1 | 1 |
| | | | Vulcanization accelerator 1 | 1.5 | 1.5 | 1.5 | 1.5 | 1.5 |
| | | | Vulcanization accelerator 2 | 2.5 | 2.5 | 2.5 | 2.5 | 2.5 |
| Evaluation | Silica dispersion index | | | 100 | 108 | 107 | 106 | 104 |
| | Fuel economy index | | | 100 | 134 | 128 | 130 | 124 |
| | Overall performance | | | 200 | 242 | 235 | 236 | 228 |

The tables show that the examples containing a polymer (A) having a silanol group, a polymer (B) having a basic functional group, and silica exhibit significantly improved overall performance in terms of dispersion of silica (temperature dependence of the heat build-up properties) and the fuel economy at constant temperatures (expressed by the sum of the two indices : silica dispersion index and fuel economy index), and are excellent in rolling resistance (fuel economy) in a wide temperature range.

Moreover, a comparison of Comparative Example 1-1 (100 parts by mass of backbone- and chain end-modified SBR), Comparative Example 1-4 (100 parts by mass of pyridine-modified SBR), and Example 1 (50 parts by mass of backbone- and chain end-modified SBR and 50 parts by mass of pyridine-modified SBR) and a comparison of Comparative Example 1-3 (100 parts by mass of chain end-modified SBR), Comparative Example 1-4 (100 parts by mass of pyridine-modified SBR), and Example 2 (50 parts by mass of chain end-modified SBR and 50 parts by mass of pyridine-modified SBR) reveal that a combination of a polymer (A) having a silanol group and a polymer (B) having a basic functional group synergistically improves the overall performance.

Provided are rubber compositions and tires having excellent overall performance in terms of dispersion of silica and fuel economy. Included are rubber compositions which contain at least one polymer (A) having a silanol group, at least one polymer (B) having a basic functional group, and at least one silica.

## Claims

1. A tire, comprising a rubber composition,
   the rubber composition comprising:

   at least one polymer (A) having a silanol group;
   at least one polymer (B) having a basic functional group; and
   at least one silica, wherein
   the rubber composition comprises at least one plasticizer including at least one resin in respective amounts satisfying the following relationship:

$$\text{Resin content/Plasticizer content} \geq 0.50.$$

2. The tire according to claim 1,

wherein the polymer (A) has the silanol group at a position other than at an end of the polymer, and
the polymer (B) has a tertiary amino group.

**3.** The tire according to claim 1 or 2,
wherein the polymer (A) has a degree of modification of 5% or higher.

**4.** The tire according to any one of claims 1 to 3,
wherein the polymer (B) has a degree of modification of 5% or higher.

**5.** The tire according to any one of claims 1 to 4,
wherein the rubber composition comprises, per 100 parts by mass of rubber components therein, 80 parts by mass or more of the silica.

**6.** The tire according to any one of claims 1 to 5,
wherein the silica has a nitrogen adsorption specific surface area of 170 $m^2/g$ or more.

**7.** The tire according to any one of claims 1 to 6,
wherein the rubber composition comprises at least one mercapto silane coupling agent.

**8.** The tire according to any one of claims 1 to 7,

wherein the polymers (A) and (B) each have an aromatic vinyl unit derived from an aromatic vinyl compound and a conjugated diene unit derived from a conjugated diene compound, and
the rubber composition further comprises at least one styrene resin.

**9.** The tire according to any one of claims 1 to 8,
wherein the rubber composition comprises at least one plasticizer and the silica in respective amounts satisfying the following relationship:

$$\text{Plasticizer content/Silica content} \geq 0.50.$$

**10.** The tire according to any one of claims 1 to 9,
wherein the rubber composition is prepared by a method comprising:

a first base kneading step of kneading rubber components including the polymers (A) and (B);
a second base kneading step of kneading the silica and a first kneaded mixture obtained in the first base kneading step; and
a final kneading step of kneading at least one vulcanizing material and a second kneaded mixture obtained in the second base kneading step.

**Patentansprüche**

**1.** Reifen, umfassend eine Kautschukzusammensetzung,
wobei die Kautschukzusammensetzung umfasst:

zumindest ein Polymer (A) mit einer Silanolgruppe;
zumindest ein Polymer (B) mit einer basischen funktionellen Gruppe; und
zumindest ein Siliciumdioxid, wobei
die Kautschukzusammensetzung zumindest einen Weichmacher einschließlich zumindest eines Harzes in jeweiligen Mengen umfasst, die die folgende Beziehung erfüllen:

$$\text{Harzgehalt/Weichmachergehalt} \geq 0{,}50.$$

**2.** Reifen nach Anspruch 1,

wobei das Polymer (A) die Silanolgruppe an einer anderen Position als an einem Ende des Polymers aufweist, und
das Polymer (B) eine tertiäre Aminogruppe aufweist.

**3.** Reifen nach Anspruch 1 oder 2,
wobei das Polymer (A) einen Modifizierungsgrad von 5 % oder mehr aufweist.

**4.** Reifen nach einem der Ansprüche 1 bis 3,
wobei das Polymer (B) einen Modifizierungsgrad von 5 % oder höher aufweist.

**5.** Reifen nach einem der Ansprüche 1 bis 4,
wobei die Kautschukzusammensetzung pro 100 Masseteile der Kautschukkomponenten darin 80 Masseteile oder mehr Siliciumdioxid umfasst.

**6.** Reifen nach einem der Ansprüche 1 bis 5,
wobei das Siliciumdioxid eine Stickstoffadsorption-spezifische Oberfläche von 170 $m^2/g$ oder mehr aufweist.

**7.** Reifen nach einem der Ansprüche 1 bis 6,
wobei die Kautschukzusammensetzung zumindest ein Mercapto-SilanKopplungsmittel umfasst.

**8.** Reifen nach einem der Ansprüche 1 bis 7,

wobei die Polymere (A) und (B) jeweils eine aromatische Vinyleinheit, die von einer aromatischen Vinylverbindung abgeleitet ist, und eine konjugiert-Dieneinheit, die von einer konjugierten Dienverbindung abgeleitet ist, aufweisen, und
die Kautschukzusammensetzung ferner zumindest ein Styrolharz umfasst.

**9.** Reifen nach einem der Ansprüche 1 bis 8,
wobei die Kautschukzusammensetzung zumindest einen Weichmacher und das Siliciumdioxid in entsprechenden Mengen umfasst, die die folgende Beziehung erfüllen:

$$\text{Weichmachergehalt/Siliciumdioxid-Gehalt} \geq 0{,}50.$$

**10.** Reifen nach einem der Ansprüche 1 bis 9,
wobei die Kautschukzusammensetzung nach einem Verfahren hergestellt ist, das umfasst:

einen ersten Grundknetschritt des Knetens von Kautschukkomponenten, die die Polymere (A) und (B) enthalten;
einen zweiten Grundknetschritt zum Kneten des Siliciumdioxids und einer ersten gekneteten Mischung, die im ersten Grundknetschritt erhalten wurde; und
einen abschließenden Knetschritt des Knetens zumindest eines Vulkanisiermaterials und einer zweiten gekneteten Mischung, die in dem zweiten Grundknetschritt erhalten wurde.

## Revendications

**1.** Pneu comprenant une composition de caoutchouc,
la composition de caoutchouc comprenant :

au moins un polymère (A) ayant un groupe silanol ;
au moins un polymère (B) ayant un groupe fonctionnel basique ; et
au moins une silice,
dans lequel la composition de caoutchouc comprend au moins un plastifiant contenant au moins une résine en des quantités respectives satisfaisant à la relation suivante :

$$\text{teneur en résine / teneur en plastifiant} \geq 0{,}50.$$

**2.** Pneu selon la revendication 1,

dans lequel le polymère (A) a le groupe silanol à une position autre qu'à une extrémité du polymère, et
le polymère (B) a un groupe amino tertiaire.

**3.** Pneu selon la revendication 1 ou 2,
dans lequel le polymère (A) a un degré de modification de 5 % ou plus.

**4.** Pneu selon l'une quelconque des revendications 1 à 3,
dans lequel le polymère (B) a un degré de modification de 5 % ou plus.

**5.** Pneu selon l'une quelconque des revendications 1 à 4,
dans lequel la composition de caoutchouc comprend 80 parties en masse ou plus de la silice pour 100 parties en masse des composants de caoutchouc dans celle-ci.

**6.** Pneu selon l'une quelconque des revendications 1 à 5,
dans lequel la silice a une surface spécifique par adsorption d'azote de 170 $m^2/g$ ou plus.

**7.** Pneu selon l'une quelconque des revendications 1 à 6,
dans lequel la composition de caoutchouc comprend au moins un agent de couplage de type mercapto-silane.

**8.** Pneu selon l'une quelconque des revendications 1 à 7,

dans lequel les polymères (A) et (B) ont chacun un motif vinylaromatique dérivé d'un composé vinylaromatique et un motif diène conjugué dérivé d'un composé diène conjugué, et
la composition de caoutchouc comprend en outre au moins une résine de styrène.

**9.** Pneu selon l'une quelconque des revendications 1 à 8,
dans lequel la composition de caoutchouc comprend au moins un plastifiant et la silice en des quantités respectives satisfaisant à la relation suivante :

$$\text{teneur en plastifiant / teneur en silice} \geq 0{,}50.$$

**10.** Pneu selon l'une quelconque des revendications 1 à 9,
dans lequel la composition de caoutchouc est préparée par un procédé comprenant :

une première étape de malaxage de base consistant à malaxer des composants de caoutchouc englobant les polymères (A) et (B) ;
une deuxième étape de malaxage de base consistant à malaxer la silice et le premier mélange malaxé obtenu dans la première étape de malaxage de base ; et
une étape finale de malaxage consistant à malaxer au moins un matériau de vulcanisation et le deuxième mélange malaxé obtenu dans la deuxième étape de malaxage de base.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012224835 A
- JP 2014122357 A